# EUROPÄISCHE PATENTANMELDUNG

(11) **EP 4 050 086 A1**
(43) Veröffentlichungstag der Anmeldung: **31.08.2022**
(21) Anmeldenummer: 21197156.9
(22) Anmeldetag: 16.09.2021
(51) Int. Cl.: C10L 5/44, C01B 32/30

(54) **BELADENE KOHLE UND VERFAHREN ZU DEREN HERSTELLUNG AUS BIOMASSE**

(30) Priorität: 26.02.2021 DE 102021104733
(71) Anmelder: IPI.AG, 3186 Düdingen (CH)
(72) Erfinder: Kusche, Stepan, 17121 Loitz (DE)
(74) Vertreter: Christ, Niko

(57) **Zusammenfassung**

Die Erfindung betrifft eine beladene Kohle, insbesondere einer Aktivkohle, sowie ein Verfahren zu deren Herstellung aus Klärschlamm. Die Aufgabe des erfindungsgemäßen Verfahrens ist die Herstellung einer beladenen Kohle, insbesondere einer Aktivkohle, aus Biomasse, insbesondere aus Klärschlamm, in einem Verfahrensschritt, bei gleichzeitiger Entfernung von etwaigen Schadstoffen, insbesondere Schwermetalle, aus der Biomasse, insbesondere aus dem Klärschlamm. Das Verfahren schlägt dabei vor, dass die Kohle mittels eines hydrothermalen Karbonisierungsverfahrens aus Biomasse, insbesondere aus Klärschlamm, gebildet und nach der Bildung kalziniert wird, wobei während der Bildung der Kohle diese mit in der Biomasse, insbesondere mit im Klärschlamm enthaltenen Verbindungen, insbesondere Metallverbindungen, beladen wird.

Somit entfällt eine üblicherweise nach der Bildung einer Aktivkohle durchzuführende Trocknung, Reinigung und die sich anschließende nachträgliche nasschemische bzw. trockene Imprägnierung einer solchen Aktivkohle mit Schwermetallverbindungen, um letztlich aktive Zentren zur Adsorption zu erzeugen.

## Beschreibung

Die Erfindung betrifft eine beladene Kohle, insbesondere einer Aktivkohle, sowie ein Verfahren zur Herstellung dieser aus Biomasse, insbesondere Klärschlamm, wobei die Kohle in einem Reaktionsbehälter unter einem erhöhten Druck und einer erhöhten Temperatur mittels eines hydrothermalen Karbonisierungsverfahrens aus Biomasse gebildet und nach der Bildung kalziniert wird.

Biomassen, insbesondere Klärschlämme, weisen selten eine homogene Zusammensetzung auf und resultieren sehr häufig aus unterschiedlichsten Stoffströmen sowie Zuflüssen, wobei ein solches Gemisch nur dann effizient aufbereitet und verwertet werden kann, wenn ein entsprechender Aufschluss wieder die spätere Selektierung in Einzelstoffströme ermöglicht.

Ein solches mögliches Aufschlussverfahren ist die Behandlung der Biomasse mittels eines hydrothermalen Karbonisierungsverfahrens (HTC), bei dem die Biomasse unter hohem Druck und Temperatur, meist in einen Temperaturbereich von 185 bis 220 °C und Drücken bis zu 25 bar, behandelt wird. Üblicherweise bestehen solche Biomassen zu einem hohen Prozentsatz aus Kohlenhydraten oder Polysacchariden, die unter Abspaltung von Kohlendioxid und Wasser Kohle, ähnlich der Braunkohle, bilden.

Solche hydrothermale Karbonisierungsverfahren sind bereits im Stand der Technik vielfältig bekannt, etwa aus der DE 10 2011 001 954 A1. Diese Schrift sieht vor, während des Ablaufens der hydrothermalen Karbonisierung eine Durchmischung der Biomasse sowie des zugefügten Dampfes vorzunehmen, um aufgrund der Durchmischung eine große Reaktionsfläche und damit eine große Angriffsfläche für Druck und Hitze bereitzustellen. Es hat sich gezeigt, dass hieraus eine deutlich schneller beginnende und gleichmäßiger ablaufende Karbonisierungsreaktion erfolgt.

Basis der hydrothermalen Karbonisierungsreaktion ist die zugeführte Biomasse, welche üblicherweise Lignin enthält, in welchem die zur Karbonisierung vorgesehene Zellulose, also ein Polysaccharid, gebunden ist.

Zu Beginn des hydrothermalen Karbonisierungsprozesses findet zunächst eine Hydrolyse statt, welche eine Umwandlung der Zellulose in Glukose bewirkt. Diese ist hierbei im Prozesswasser gelöst. Innerhalb des Prozesses erfordert die Hydrolyse lediglich eine kurze Zeit, etwa ein bis zwei Minuten. Anschließend findet dann die eigentliche Karbonisierungsreaktion statt, wobei diese meist unter einem Druck von etwa 25 bar und bei einer Temperatur von 210 bis 230 °C abläuft.

Nach der Karbonisierung erfolgt als praktisch letzter großer Schritt die sogenannte Kondensation, bei welcher ein Zusammenschließen der wasserlöslichen Kohlenstoff-Bestandteile zu größeren Molekülen erfolgt. Daraus bildet sich anschließend eine Kohle, die sogenannte HTC-Kohle. Diese hat ähnliche Eigenschaften wie Braunkohle und kann daher als Energieträger, aber auch zur Bodenverbesserung oder als Sorbens in der Abwasserreinigung eingesetzt werden.

Jedoch geht bei der Verbrennung der HTC-Kohle der meist enthaltene wertvolle Phosphor verloren und auch die Verwendung der HTC-Kohle als Dünger auf den Feldern steht in der Kritik, da insbesondere als Biomasse verwendete Klärschlämme neben den in der Biomasse typischen Bestandteilen ebenfalls Schadstoffe, wie z.B. Schwermetalle, Dioxine/Furane, polychlorierte Biphenyle (PCB), polyzyklische aromatische Kohlenwasserstoffe (PAK), Pestizidrückständen, Pharmazeutika, Kosmetika usw., enthalten.

Da jedoch die HTC-Kohle auch als Trägermaterial für Katalysatoren geeignet ist, stellt sich das erfindungsgemäße Verfahren die Aufgabe, eine beladene Kohle aus Biomasse in einem Verfahrensschritt bei der hydrothermalen Karbonisierung herzustellen, bei gleichzeitiger Entfernung von etwaigen Schadstoffen, insbesondere von Schwermetallen, aus der Biomasse.

Diese Aufgabe wird mit einem Verfahren gemäß den Merkmalen des unabhängigen Anspruchs 1 gelöst. Weiter löst diese Aufgabe eine Kohle gemäß den Merkmalen des nebengeordneten Anspruchs 7 und eine Verwendung einer solchen Kohle gemäß den Merkmalen des Verwendungsanspruchs 10. Vorteilhafte Ausgestaltungen des Verfahrens und der Kohle können den sich jeweils anschließenden, abhängigen Ansprüchen entnommen werden.

Das erfindungsgemäße Verfahren sieht gemäß Anspruch 1 vor, dass eine Kohle, insbesondere eine Aktivkohle, durch ein hydrothermales Karbonisierungsverfahren aus Biomasse, insbesondere Klärschlamm, gebildet und anschließend kalziniert wird, wobei sich das Verfahren dadurch auszeichnet, dass die Kohle bei der Bildung durch das hydrothermale Karbonisierungsverfahren mit in der Biomasse enthaltenen Verbindungen beladen wird.

Biomassen, insbesondere Klärschlamm, beinhaltet neben den typischen Bestandteilen wie Polysacchariden und anderen kohlenstoffhaltigen Verbindungen ebenfalls Schadstoffe, z.B. Schwermetalle wie Blei, Cadmium, Chrom, Kupfer, Molybdän, Nickel, Quecksilber, Thallium, Vanadium, Zink und Zinn, Schwermetallsalzverbindungen dieser, beispielsweise Metallhydroxide, sowie Dioxine/Furane, polychlorierte Biphenyle (PCB), polyzyklische aromatische Kohlenwasserstoffe (PAK), Ortho-Phosphate etc.

Zum einen können durch die Bildung der Kohle direkt aus der Biomasse heraus die zuvor genannten Schadstoffe direkt gebunden und aus der weiter zu verarbeitenden Biomasse bzw. dem Rezyklat entfernt werden.

Zum anderen können die in der Biomasse vorhandenen Schwermetallverbindungen bei der Bildung der Kohle beispielsweise als Metallhydroxide in die Kohle mit eingebunden werden, wobei diese immobilisierten Metallverbindungen anschließend nahezu kaum entfernt werden können, sodass diese selbst durch aggressive Säuren, z.B. Schwefelsäure, nur unter extremen Bedingungen aus der Kohle herausgelöst werden können. Somit können also Schadstoffe, insbesondere Schwermetallverbindungen, effektiv und semipermanent durch Beladung der Kohle aus der Biomasse entfernt werden.

Dabei ist die Beladung der durch das hydrothermale Karbonisierungsverfahren hergestellten Kohle aus Biomasse, insbesondere Klärschlamm, an das Prinzip der diffusionskontrollierten Imprägnierung angelehnt, bei der in Wasser gelöste Edukte über einen oder mehrere Prozessschritte in ein organisches Gerüst, meist einem katalytischen Trägermaterial, beispielsweise Aktivkohle, eingelagert und anschließend durch Kalzinierung in das jeweilige Metall oder Metalloxid überführt werden.

Üblicherweise wird bei der diffusionskontrollierten Imprägnierung eine wässrige Metallsalzlösung mit einem Trägermaterial, meist Aktivkohle, Aluminiumoxid, Siliziumoxid oder Zeolith, in Kontakt gebracht, damit die Ionen der Edukte, also die Metall-Kationen, durch Diffusion in die Poren des Trägermaterials eindringen und schließlich an den Porenwänden adsorbiert werden können, bevor das nunmehr beladene Trägermaterial von der flüssigen Phase durch beispielsweise Ausfällen oder Trocknung entfernt wird.

Durch eine sich anschließende Kalzinierung können dann die innerhalb der Poren und an den Porenwänden des Trägermaterials adsorbierten Metallionen reduziert bzw. oxidiert werden, sodass die Metalle bzw. Metalloxide gebildet werden.

Diese sogenannten aktiven Zentren, die insbesondere auch katalytische Eigenschaften aufweisen können, sind in der Lage, abhängig vom jeweiligen Metall, unterschiedlichste Verbindungen, insbesondere Kohlenwasserstoffe, beispielsweise in Form von pharmazeutischen Rückständen und Hormonen, zu binden bzw. zu absorbieren, womit solche Rückstände beispielsweise aus Abwässern mit einer verfahrensgemäß hergestellten, beladenen Kohle entfernt werden können.

Somit entfällt durch eine mit dem erfindungsgemäßen Verfahren hergestellte und beladene Kohle die sich üblicherweise nach der Bildung einer Aktivkohle anschließende durchzuführende Trocknung und Reinigung, sowie die nachträgliche nasschemische bzw. trockene Imprägnierung solch einer Aktivkohle mit Schwermetallverbindungen, um letztlich aktive Zentren zur Adsorption von Schadstoffen oder zur Katalyse in dieser zu erzeugen.

Um eine möglichst gleichmäßige Benetzung der Porenstrukturen mit den aktiven Zentren vor der Kalzinierung zu erhalten, sieht das Verfahren in einer vorteilhaften Ausgestaltung vor, dass zur Beendigung der Bildung der Kohle und der Beladung der Kohle mit etwaigen im Klärschlamm enthaltenen Metallverbindungen, der Druck und die Temperatur innerhalb des Reaktionsbehälters während des hydrothermale Karbonisierungsverfahrens unter die der Hydrolyse-Bedingungen gebracht werden. Dies kann beispielsweise dadurch geschehen, dass die Hydrolyse-Temperatur unter 185 °C gebracht wird, da mit Senkung der Temperatur zeitgleich eine Senkung des Druckes einhergeht. Gleiches gilt bei der Senkung des Druckes entsprechend. Durch das gezielte Herabsetzen des Drucks und der Temperatur unter die der Hydrolyse-Bedingungen bei der Bildung der Kohle mittels eines hydrothermalen Karbonisierungsprozesses, können die innerhalb des Reaktionsbehälters ablaufenden Reaktionen verlangsamt und letztlich der Ertrag sowie die Partikelgröße der beladenen Kohle beeinflusst werden.

Auch die Justierung des pH-Wertes zwischen einem sauren und leicht basischen Bereich, bevorzugt in einem Wertebereich des pH-Werts zwischen 5 und 8, stellt eine vorteilhafte Ausgestaltung des Verfahrens dar. Durch die gezielte Einstellung des pH-Wertes können die bei der Bildung der Kohle zu fällenden bzw. einzulagernden Metallverbindungen, insbesondere die Metallhydroxide, in die Kohle, gesteuert werden. Insbesondere durch Einstellung des pH-Wertes in einen Bereich von 5,5 bis 6,5 können nahezu alle in der Biomasse enthaltenden Metallverbindungen, insbesondere deren Metallhydroxide, bei der Bildung der Kohle in die Kohle mit eingeschlossen bzw. ausgefällt werden.

Somit kann insbesondere durch Einstellung der Temperatur, des Drucks und des pH-Wertes eine kontrollierte bzw. gleichmäßige Verteilung der reaktiven Zentren innerhalb der Porenstrukturen der Kohle bei der Bildung und Beladung der Kohle aus Biomasse, insbesondere Klärschlamm, ermöglicht werden.

Ebenfalls lässt sich somit durch die definierbaren Bedingungen Temperatur, Druck, pH-Wert, Reaktionszeit, etc. bei der Bildung der Kohle aus Biomasse, insbesondere Klärschlamm, die Ausbeute der Kohle maximieren.

Ist die Kohle aus Biomasse, insbesondere Klärschlamm, gebildet und mit etwaigen Schadstoffen, insbesondere Metallverbindungen aus Klärschlamm, beladen, so wird die so beladene Kohle durch Filtration eingedickt und/oder getrocknet, um etwaige überschüssige Flüssigkeiten bzw. Restwasser aus der beladenen Kohle zu entfernen. Auch weitere Fest-Flüssig-Trennprinzipien, beispielsweise die Zentrifugation, Sedimentation, etc. könnten hier angewendet werden.

Da nicht nur Verbindungen, die als aktive Zentren innerhalb der Kohle nach der Kalzinierung dienen können, bei der Bildung der Kohle aus Klärschlamm in diese eingeschlossen werden, beispielsweise Alkali- und Erdalkalimetallverbindungen, Schwefel- und Phosphorverbindungen, polyzyklische aromatische Kohlenwasserstoffe, sowie polychlorierte Biphenyle, wird die beladene Kohle mittels Auslaugung gereinigt, wobei unter Auslaugung die Herauslösung von Substanzen mittels eines jeweils geeigneten Lösungsmittels aus einem Feststoff zu verstehen ist.

Um auch weitere, nicht immobilisierte und ebenso unerwünschte immobilisierte Substanzen bzw. Verbindungen aus der Kohle entfernen zu können, kann die beladene Kohle mit Lösungen bzw. Lösungsmitteln mit einem sauren pH-Wert, bevorzugt einem pH-Wert von 1 bis 2, gewaschen werden. Dadurch können insbesondere auch immobilisierte Schwermetallsalze, Alkali- und Erdalkalimetallverbindungen, sowie schwerlösliche Schwefel- und Phosphorverbindungen aus der beladenen Kohle gelöst werden.

Ferner sieht das Verfahren in einer vorteilhaften Ausgestaltung vor, dass die beladene Kohle kalziniert wird, insbesondere mit Heißdampf in einem bevorzugten Temperaturbereich von 300 °C bis 800 °C, besonders bevorzugt in einem Temperaturbereich 680 °C bis 720 °C. Die Kalzinierung mit Heißdampf in einem bevorzugten Temperaturbereich von 300 °C bis 800 °C, besonders bevorzugt in einem Temperaturbereich von 680 °C bis 720 °C, verleiht der Kohle aus Biomasse, insbesondere Klärschlamm, eine hohe Porosität und führt zu aktiven Zentren. Auch die Agglomeration bzw. das Sintern der Metallverbindungen, also der aktiven Zentren, kann durch die Behandlung der beladenen Kohle mit Heißdampf beeinflusst werden, wodurch letztlich die spezifische Oberfläche, welche Einfluss auf die Adsorptionsrate hat, der beladenen Kohle kontrolliert werden kann.

Auch eine vollständige bzw. teilweise Reduktion der innerhalb der Kohle vorhandenen Metallverbindung mittels Wasserstoffs könnte durchgeführt werden, sodass die vorhandenen Metallverbindungen, insbesondere Metallhydroxide, - sulfate, und -nitrate, zu den jeweiligen Metallen zumindest teilweise reduziert werden.

Letztlich kann mit dem erfindungsgemäßen Verfahren eine beladene Kohle hergestellt werden, die eine Vielzahl von unterschiedlichen Metallen und Metallverbindungen als aktive Zentren aufweist, insbesondere Verbindungen von Aluminium, Blei, Cadmium, Chrom, Eisen, Kalium, Kalzium, Kupfer, Magnesium, Molybdän, Natrium, Nickel, Quecksilber, Thallium, Vanadium, Zink und Zinn. Diese aktiven Zentren bzw. Metalle und/oder Metallverbindungen sind letztlich dafür verantwortlich, dass Verunreinigungen, insbesondere Nanopartikel, pharmazeutische und kosmetische Rückstände sowie Hormone, aus Abwässern von der beladenen Kohle spezifisch adsorbiert und somit aus etwaigen Abwässern entfernt werden können.

Denkbar ist dabei ein Einsatz der beladenen Kohle als Reinigungsstufe bzw. als Filtermaterial in einer Reinigungsstufe, insbesondere bei der Reinigung von Abwässern einer Kläranlage. Insbesondere könnte die beladene Kohle bei Kläranlagen in der 4. Reinigungsstufe eingesetzt werden, bei der üblicherweise Pulveraktivkohle verwendet wird, da diese aufgrund ihrer aktiven Zentren eine höhere Adsorptionsrate und damit letztlich eine bessere Filterwirkung aufweist als die herkömmliche Pulveraktivkohle.

Dabei hängt gemäß Correa et al.¹ die Adsorptionsrate nicht direkt von der spezifischen Oberfläche des Absorptionsmediums ab, also hier der beladenen Kohle, sondern vielmehr von den jeweiligen Inhaltsstoffen oder der zeitweisen oder ständigen Anwesenheit bestimmter reaktiver Stoffe.

Die in der Publikation aufgestellte These über die spezifischen Eigenschaften der Kohle aus Biomasse bzw. Klärschlamm konnte durch Testversuche mit be-
¹ Catalina Rodriguez Correa, Thomas Otto, Andrea Kruse, Influence of the biomass components on the pore formation of activated carbon, Biomass and Bioenergy, Volume 97, 2017, Pages 53-64, ISSN 0961-9534, https://doi.org/10.1016/j.biombioe.2016.12.017.

ladener Kohle aus Klärschlamm gestützt werden, da in den Versuchen die beladene Kohle trotz einer geringeren Oberfläche von bis zu 500 m²/g, besonders bevorzugt von 180 m²/g bis 300 m²/g, gegenüber einer üblichen Aktivkohle, insbesondere einer Pulveraktivkohle, mit einer Oberfläche von bis zu 800 m²/g, die zuvor genannten Verunreinigungen, insbesondere Nanopartikeln, pharmazeutische und kosmetischen Rückstände sowie Hormone, bis zu 90 % aus Abwässern absorbieren konnte.

Daher eignet sich die erfindungsgemäß hergestellt und beladene Kohle aus Biomasse, insbesondere aus Klärschlamm, als Adsorptionsmedium (Sorbens) zur Reinigung von Abwässern, insbesondere zur Reinigung von Abwässern aus einer Kläranlage, da hier häufig das Problem der Entfernung von Nanopartikeln, insbesondere in Form von Mikroplastik, pharmazeutischen Rückständen, beispielsweise Abbauprodukte von Medikamenten sowie Hormonen aus Abwässern auftritt.

Nachfolgend ist ein Beispiel der Kalzinierung einer aus einem hydrothermalen Karbonisierungsprozess entstammenden Kohle mit Heißdampf beschrieben sowie in Abbildung 1 der zeitliche Verlauf gezeigt.

### Beispiel 1:

Zur Kalzinierung einer aus einem hydrothermalen Karbonisierungsprozess entstammenden Kohle wurden 31,4 g Kohle in einem mit Stickstoff als Schutzgas durchspülten Heizrohrofen vorgelegt. Während der Aufheizung des Heizrohrofens mit einer Aufheizrate von 20 K/min auf 700 °C sowie bei der sich hieran anschließenden Haltedauer von 75 Minuten wurden 15 ml/h Wasser hinzugegeben, wobei in den letzten 15 Minuten der 75-minütigen Haltedauer kein weiteres Wasser hinzugefügt wurde.

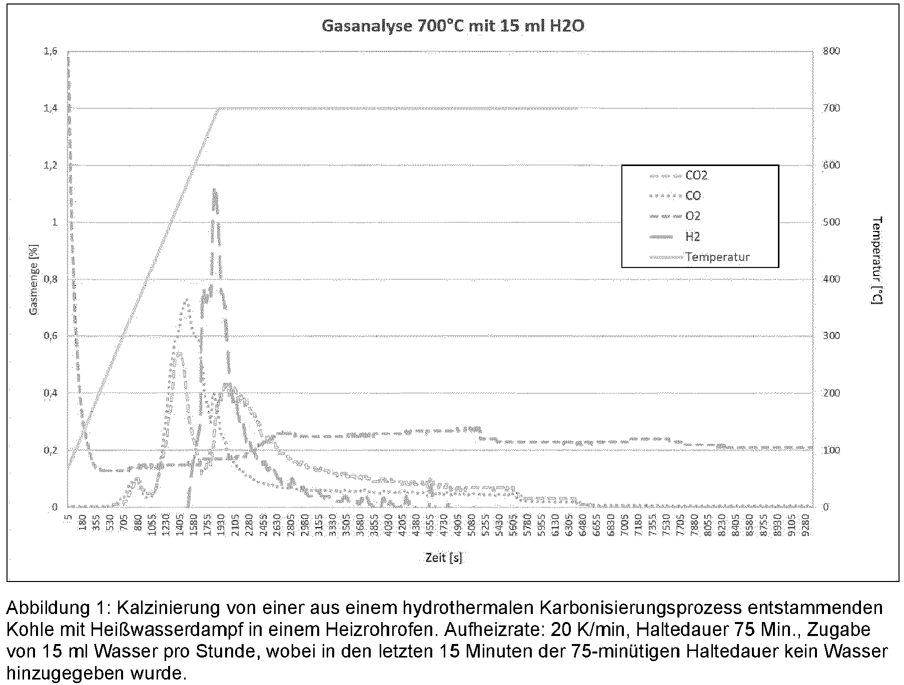

Aus der Abbildung 1 geht hervor, dass sich während der Aufheizphase H₂, CO, CO₂ sowie O₂ bilden, wobei sich diese im Laufe der Haltedauer zunehmend verringern. H₂, CO, CO₂ sowie O₂ bilden sich dabei vermutlich vorwiegend aufgrund der pyrolytischen Zersetzung der Kohle. Dabei ist das bei der Aufheizung bildende H₂ wohl ausschlaggebend für die Aktivierung der beladenen Kohle aus Biomasse verantwortlich, da H₂ als Reduktionsmittel etwaige in der beladenen Kohle eingeschlossene bzw. vorhandene metallische Verbindungen reduzieren kann. Zur Vergrößerung der Poren trägt mit aller Wahrscheinlichkeit das bei der Kalzinierung hinzugefügte Wasser in Form von Heißwasserdampf bei.

Nach durchgeführter Heißwasserdampf-Kalzinierung wurde eine Ausbeute von 5,4 g Kohle erhalten. Dies stellt eine Differenz von 26 g zur vorgelegten Kohle dar, wobei hiervon ca. 12,9 g auf das innerhalb der vorgelegten Kohle befindliche Wasser zurückzuführen ist. Somit sind ca. 49,5 % der entwichenen Masse auf die Eingangsfeuchtigkeit und ca. 50,5 % auf die eigentliche Trockensubstanz zurückzuführen. Damit liegt, bezogen auf die Trockensubstanz, eine Massenreduktion von ca. 70,8 % von 18,5 g auf 5,4 g vor.

Die so erhaltene, durch Heißwasserdampf kalzinierte Kohle weist dabei eine innere Oberfläche von 180 m²/g auf, welche mittels einer sich an die Kalzinierung anschließende BET-Messung bestimmt wurde.

## Patentansprüche

1. Verfahren zur Herstellung einer Kohle, insbesondere einer Aktivkohle, aus Biomasse, insbesondere Klärschlamm, wobei die Kohle in einem Reaktionsbehälter unter einem erhöhten Druck und einer erhöhten Temperatur mittels eines hydrothermalen Karbonisierungsverfahrens aus Biomasse gebildet und nach der Bildung kalziniert wird, **dadurch gekennzeichnet, dass** die Kohle bei ihrer Bildung und bei einer Beendigung der Bildung der beladenen Kohle mit in der Biomasse enthaltenen Verbindungen, insbesondere Metallverbindungen, beladen wird, wobei zur Beendigung der Bildung der beladenen Kohle der Druck und die Temperatur in dem Reaktionsbehälter unter die der Hydrolyse-Bedingungen abgesenkt werden.

2. Verfahren nach Anspruch 1, **dadurch gekennzeichnet, dass** der pH-Wert der innerhalb des Reaktionsbehälters vorliegenden Biomasse in einen sauren bis schwach basischen Bereich, bevorzugt in einen Bereich von 5 bis 8, besonders bevorzugt in einen Bereich von 5,5 bis 6,5, eingestellt wird.

3. Verfahren nach wenigstens einem der vorhergehenden Ansprüche, **dadurch gekennzeichnet, dass** die beladene Kohle durch Filtration eingedickt und/oder getrocknet wird.

4. Verfahren nach wenigstens einem der vorhergehenden Ansprüche, **dadurch gekennzeichnet, dass** die beladene Kohle mittels Auslaugung gereinigt wird.

5. Verfahren nach wenigstens einem der vorhergehenden Ansprüche, **dadurch gekennzeichnet, dass** Verbindungen innerhalb der beladenen Kohle durch Auswaschen mit Lösungen und/oder Lösungsmitteln mit einem sauren pH-Wert, bevorzugt einem pH-Wert von 0,5 bis 2, entfernt werden.

6. Verfahren nach wenigstens einem der vorhergehenden Ansprüche, **dadurch gekennzeichnet, dass** die beladene Kohle mit Heißdampf kalziniert wird, bevorzugt in einem Temperaturbereich von 300 °C bis 800 °C, besonders bevorzugt in einem Temperaturbereich von 680 °C bis 720 °C.

7. Kohle aus Biomasse, insbesondere Klärschlamm, erhältlich aus einem Verfahren gemäß den Ansprüchen 1 bis 6, **dadurch gekennzeichnet, dass** diese wenigstens ein Metall und/oder eine Metallverbindung, insbesondere ein Metallhydroxid, insbesondere von Aluminium, Blei, Cadmium, Chrom, Eisen, Kalium, Kalzium, Kupfer, Magnesium, Molybdän, Natrium, Nickel, Quecksilber, Thallium, Vanadium, Zink oder Zinn, beinhaltet.

8. Kohle nach Anspruch 7, **dadurch gekennzeichnet, dass** diese eine Oberfläche von bis zu 800 m²/g aufweist, bevorzugt eine Oberfläche von bis zu 500 m²/g, besonders bevorzugt eine Oberfläche von 180 m²/g bis 300 m²/g.

9. Kohle nach Anspruch 7 oder 8, **dadurch gekennzeichnet, dass** diese eine spezifische Adsorption für Verunreinigungen, insbesondere für Nanopartikel, pharmazeutische Rückstände und Hormone, aufweist.

10. Verwendung einer Kohle aus Biomasse nach einem der Ansprüche 7 bis 9, zur Entfernung von Nanopartikeln, pharmazeutischen Rückständen und Hormonen aus Abwässern.

## Geänderte Patentansprüche

### Geänderte Patentansprüche gemäss Regel 137(2) EPÜ.

1. Verfahren zur Herstellung einer Kohle, insbesondere einer Aktivkohle, aus Biomasse, insbesondere Klärschlamm, wobei die Kohle in einem Reaktionsbehälter unter einem erhöhten Druck und einer erhöhten Temperatur mittels eines hydrothermalen Karbonisierungsverfahrens aus Biomasse gebildet und nach der Bildung kalziniert wird, wobei die Kohle bei ihrer Bildung und bei einer Beendigung der Bildung der beladenen Kohle mit in der Biomasse enthaltenen Verbindungen, insbesondere Metallverbindungen, beladen wird, wobei zur Beendigung der Bildung der beladenen Kohle der Druck und die Temperatur in dem Reaktionsbehälter unter die der Hydrolyse-Bedingungen abgesenkt werden, **dadurch gekennzeichnet, dass** die beladene Kohle mit Heißdampf kalziniert wird.

2. Verfahren nach Anspruch 1, **dadurch gekennzeichnet, dass** der pH-Wert der innerhalb des Reaktionsbehälters vorliegenden Biomasse in einen sauren bis schwach basischen Bereich, bevorzugt in einen Bereich von 5 bis 8, besonders bevorzugt in einen Bereich von 5,5 bis 6,5, eingestellt wird.

3. Verfahren nach wenigstens einem der vorhergehenden Ansprüche, **dadurch gekennzeichnet, dass** die beladene Kohle durch Filtration eingedickt und/oder getrocknet wird.

4. Verfahren nach wenigstens einem der vorhergehenden Ansprüche, **dadurch gekennzeichnet, dass** die beladene Kohle mittels Auslaugung gereinigt wird.

5. Verfahren nach wenigstens einem der vorhergehenden Ansprüche, **dadurch gekennzeichnet, dass** Verbindungen innerhalb der beladenen Kohle durch Auswaschen mit Lösungen und/oder Lösungsmitteln mit einem sauren pH-Wert, bevorzugt einem pH-Wert von 0,5 bis 2, entfernt werden.

6. Kohle aus Biomasse, insbesondere Klärschlamm, erhältlich aus einem Verfahren gemäß den Ansprüchen 1 bis 5, wobei diese wenigstens ein Metall und/oder eine Metallverbindung, insbesondere ein Metallhydroxid, insbesondere von Aluminium, Blei, Cadmium, Chrom, Eisen, Kalium, Kalzium, Kupfer, Magnesium, Molybdän, Natrium, Nickel, Quecksilber, Thallium, Vanadium, Zink oder Zinn, beinhaltet, **dadurch gekennzeichnet, dass** diese eine Oberfläche von bis zu 800 m²/g aufweist, bevorzugt eine Oberfläche von bis zu 500 m²/g, besonders bevorzugt eine Oberfläche von 180 m²/g bis 300 m²/g.

7. Verwendung einer Kohle aus Biomasse nach Anspruch 6, zur Entfernung von Nanopartikeln, pharmazeutischen Rückständen und Hormonen aus Abwässern.
